# EUROPÄISCHE PATENTSCHRIFT

(11) **EP 3 000 739 B1**
(45) Veröffentlichungstag und Bekanntmachung des Hinweises auf die Patenterteilung: **14.11.2018**
(21) Anmeldenummer: 14186798.6
(22) Anmeldetag: 29.09.2014
(51) Int. Cl.: B65B 39/06, B65B 43/54, B65B 1/28, B65G 69/18, B65B 69/00

(54) **Beutelanschlusselement zum Anschluss eines Beutels an einem Behälter zum kontaminationsfreien Befüllen oder Entleeren des Beutels sowie Verfahren dazu**
Bag connection element for connecting a bag on a container for contamination-free filling and/or emptying of the bag and associated method
Élément de liaison de sac destiné à relier un sac sur un récipient destiné à remplir sans contamination ou à vider le sac et procédé associé

(43) Veröffentlichungstag der Anmeldung: 30.03.2016
(73) Patentinhaber: Schnyder, Viktor, 3942 Raron (CH)
(72) Erfinder: Schnyder, Viktor, 3942 Raron (CH)
(74) Vertreter: Patentbüro Paul Rosenich AG

(56) Entgegenhaltungen:
- EP-A1- 1 213 244
- CN-A- 103 381 947
- DE-A1-102006 057 761

## Beschreibung

Die Erfindung betrifft ein Beutelanschlusselement zum Anschluss eines Beutels an einem Behälter zum kontaminationsfreien Befüllen oder Entleeren des Beutels nach dem Anspruch 1. Weiter betrifft die Erfindung ein Verfahren zum Anschluss eines Beutels an einem Behälter zum kontaminationsfreien Befüllen oder Entleeren des Beutels unter Verwendung von zumindest einem solchen Beutelanschlusselement nach dem Anspruch 7.

An die Ausgangsstoffe, wie Rohstoffe oder Komponenten, für industriell hergestellte Produkte werden immer höhere Anforderungen gestellt. Diese betreffen beispielsweise die Reinheit der Ausgangsstoffe und/oder, insbesondere bei Wirkstoffen, deren Konzentration. Hoch konzentrierte Ausgangsstoffe können zudem toxisch sein. Für einen Transport solcher Ausgangsstoffe werden diese in entsprechend dichte Behälter oder Beutel abgefüllt und die Behälter beziehungsweise die Beutel an dem Verwendungsort wieder entleert. Die Entleerung erfolgt teils portionenweise, so dass an dem Behälter beziehungsweise an dem Beutel mehrmals Beutel angeordnet werden müssen. Dabei muss ein kontaminationsvermeidendes Entleeren wie auch Befüllen der Behälter beziehungsweise der Beutel zum Schutz der Benutzer und der Umwelt gewährleistet sein.

Die CN 1033881947 A zeigt eine Müllbeutelhaltevorrichtung bestehend aus einem äusseren Ring und einen inneren Ring, wobei der äussere Ring auf seiner Innenseite nierenförmige Nuten aufweist und der innere Ring auf seiner Aussenseite nierenförmige Federn aufweist. Im zusammengesetzten Zustand der Müllbeutelhaltevorrichtung wird der innere Ring in den äusseren Ring gelegt, wobei die nierenförmigen Federn in die nierenförmigen Nuten gesetzt werden, womit der Müllbeutel zwischen äusseren Ring und inneren Ring geklemmt wird.

Aus der WO 2010/052489 A1 ist ein Verfahren zur kontaminationsvermeidenden Entleerung beziehungsweise Befüllung eines Behälters bekannt, wobei ein Container und der Behälter jeweils einen hülsenförmigen Anschlussbereich mit mehreren Haltenuten an der Aussenseite aufweisen. An diesen Haltenuten wird eine Transferhülse angeordnet, die mit an ihren Enden vorgesehenen O-Ringen über den jeweiligen Anschlussbereich gestülpt und mittels einer Klemme an diesem festgelegt wird. Nach dem Entleeren beziehungsweise Befüllen des Behälters werden die Klemmen entfernt und die Transferhülse in Bereichen benachbart zu den freien Enden der Anschlussbereiche mit jeweils einem Verschlusselement verschlossen. Die Verschlusselemente werden dann durchtrennt, so dass die Anschlussbereiche des Behälters und des Containers wieder verschlossen sind. Der verbleibende, ebenfalls verschlossene Mittelabschnitt der Transferhülse wird entsorgt. Für eine weitere Entleerung beziehungsweise Befüllung eines Behälters wird eine neue Transferhülse über die verschlossenen Anschlussbereiche gestülpt, mittels der Klemmen festgelegt und die verschlossenen Beutelabschnitte von den Anschlussbereichen durch Seitenarme der Transferhülse entfernt.

Nachteilig an dieser bekannten Lösung ist, dass dieses Verfahren zur kontaminationsvermeidenden Entleerung beziehungsweise Befüllung eines direkt angeordneten Beutels nicht geeignet ist, da dieser temporär nur über den O-Ring an dem Anschlussbereich gehalten ist. Diese Art des Anschlusses erfordert einiges an Geschick des Anwenders und kann bei einem flexiblen Behältnis, wie es ein Beutel darstellt, zu ungewollter Kontaminierung der Umgebung führen.

Die EP 1 213 244 A1 zeigt eine mechanisch ausgebildete Doppelklappenanschluss-Vorrichtung zum Transferieren eines fliessfähigen Produkts von einem ersten Behälter in einen zweiten Behälter.

Aus der EP 1 708 941 B1 ist ein Verfahren zur kontaminationsvermeidenden Entleerung beziehungsweise Befüllung eines Behälters mit einem flexiblen, hülsenförmigen Anschlussbereich bekannt. An dem Container ist ein Schlauchfolien-Vorratsbehälter vorgesehen. Zum Verbinden des freien Endbereichs des Schlauchfolienabschnitts aus dem Schlauchfolien-Vorratsbehälter mit dem freien Endbereich des Anschlussbereichs des Behälters wird zuerst der Schlauchfolienabschnitt mittels eines Axialdichtrings am freien Ende des steifen Anschlussbereichs des Containers fixiert. Dann wird das freie Ende des Schlauchfolienabschnitts durch eine ringförmige Blähringaufnahme hindurchgeführt und das freie Ende des Anschlussbereichs des Behälters durch einen Gegenring geführt sowie um diesen herumgelegt. Anschliessend wird der Gegenring in die Blähringaufnahme geschoben und der Behälter entleert beziehungsweise befüllt. Das weitere Handling entspricht im Wesentlichen dem Verfahren, wie es im Zusammenhang mit der vorgenannten WO 2010/052489 A1 dargelegt wurde. Ein vergleichbares Verfahren offenbart beispielsweise auch die DE 10 2006 057 761 A1.

Nachteilig an dieser bekannten Lösung ist, dass ein Schlauchfolien-Vorratsbehälter am Container vorgesehen werden muss. Zudem erfordert dieses Verfahren eine Vielzahl von aufwändigen Arbeitsschritten, welche bei einer Nicht-Einhaltung des genauen Ablaufs dazu führen, dass die Dichtigkeit der zwischen dem Schlauchfolienabschnitt und dem Anschlussbereich des Behälters geschaffenen Verbindung nicht gewährleistet ist.

Aufgabe der vorliegenden Erfindung ist es somit, eine Vorrichtung und ein Verfahren zur kontaminationsvermeidenden Entleerung beziehungsweise Befüllung eines Beutels zu schaffen, welche beziehungsweise welches die vorgenannten Nachteile nicht aufweist und insbesondere auch bei mehrmaligen Entleerungsvorgängen beziehungsweise Befüllvorgängen ein einfaches Handling bei einer hohen Sicherheit für den Benutzer und die Umwelt sicherstellt.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung umfasst ein Beutelanschlusselement zum Anschluss eines Beutels an einem Behälter zum kontaminationsfreien Befüllen oder Entleeren des Beutels eine Durchführöffnung für das zu befüllende beziehungsweise zu entleerende Gut und einen Anschlussabschnitt, der zumindest eine erste Festlegeeinrichtung aufweist, sowie eine Halteaufnahme zur Aufnahme eines Beutelabschnitts des Beutels, wobei der Beutel, vorteilhaft mittels eines Halteelements, in der Halteaufnahme gehalten ist. Weiter ist die zumindest eine erste Festlegeeinrichtung zum Zusammenführen mit einem weiteren Beutelanschlusselement oder zum Festlegen an einem Behälteranschlusselement eines Behälters geeignet und ein Verbindungsabschnitt, der zumindest eine zweite Festlegeeinrichtung zum Zusammenführen des Beutelanschlusselements mit einem weiteren Beutelanschlusselement aufweist, wobei die zumindest eine zweite Festlegeeinrichtung komplementär zu der zumindest einen ersten Festlegeeinrichtung ausgebildet ist, vorhanden.

Das erfindungsgemässe Beutelanschlusselement ermöglicht eine Vielzahl von Entleerungsvorgängen beziehungsweise Befüllungsvorgängen, wobei zu keiner Zeit die Gefahr einer Kontaminierung der Umgebung besteht. Und das Handling einfach ist.

Der Verbindungsabschnitt weist vorteilhaft eine Aussenfläche auf, die auf die Innenfläche des Anschlussabschnitts abgestimmt ist, so dass im zusammengeführten Zustand zweier Beutelanschlusselemente die Aussenfläche des Verbindungsabschnitts mit der Innenfläche des Anschlussabschnitts eines zweiten Beutelanschlusselements zumindest bereichsweise in Überlappung und besonders vorteilhaft in eine dichtende Anlage kommt.

Die besonderen Vorteile der Erfindung eröffnen sich auch unter Berücksichtigung der nachfolgenden Ausführungen zu dem erfindungsgemässen Verfahren sowie zu dem Ausführungsbeispiel.

An dem Behälteranschlusselement des Behälters ist vorteilhaft ebenfalls eine analog der zumindest einen zweiten Festlegeeinrichtung am Verbindungsabschnitt des Beutelanschlusselements ausgebildete Festlegeeinrichtung vorgesehen, so dass ein erstes Beutelanschlusselement einfach und sicher an diesem festlegbar ist.

Vorzugsweise sind die zumindest eine erste Festlegeeinrichtung und die zumindest eine zweite Festlegeeinrichtung als miteinander in Eingriff bringbare Teile eines Bajonettverschlusses ausgebildet, so dass mehrere Beutelanschlusselemente einfach und sicher miteinander verbindbar sind. Die Anzahl und Ausgestaltung der einzelnen Teile dieser Festlegeeinrichtungen werden vorteilhaft derart gewählt, dass mit einer Drehung beziehungsweise mit einer Drehbewegung über einen geringen Winkelbereich eine sicher Verbindung zwischen den Beutelanschlusselementen gewährleistet ist.

Bevorzugt ist zumindest eine erste Sperreinrichtung vorgesehen, die an dem Beutelanschlusselement angeordnet ist und welche ein unbeabsichtigtes Entfernen des entsprechenden Beutelanschlusselements von dem zuvor angeordneten Beutelanschlusselement oder gegebenenfalls von einem Behälteranschlusselement des Behälters verhindert, sobald das entsprechende Beutelanschlusselement bei der Anordnung desselben diese zumindest eine erste Sperreinrichtung überschritten hat. Die zumindest eine erste Sperreinrichtung ist vorzugsweise als eine Rückdrehsperreinrichtung ausgebildet, welche ein Zurückdrehen eines aufgedrehten Beutelanschlusselements verhindert.

Vorteilhaft ist die zumindest eine erste Sperreinrichtung an dem Verbindungsabschnitt des Beutelanschlusselements angeordnet, was eine einfache Ausgestaltung des Beutelanschlusselements ermöglicht.

Weiter vorteilhaft ist die zumindest eine erste Sperreinrichtung bei der zumindest einen zweiten Festlegeeinrichtung angeordnet, so dass die zumindest eine erste Sperreinrichtung einfach mit der zumindest einen ersten Festlegeeinrichtung in Wirkverbindung bringbar ist.

Vorzugsweise ist zumindest eine zweite Sperreinrichtung vorgesehen, die mit einem vorher angeordneten Beutelanschlusselement verriegelbar ist und somit ein unbeabsichtigtes Entfernen des entsprechenden Beutelanschlusselements von dem zuvor angeordneten Beutelanschlusselement oder gegebenenfalls von einem Behälteranschlusselement des Behälters verhindert, sobald das entsprechende Beutelanschlusselement bei der Anordnung desselben diese zumindest eine zweite Sperreinrichtung überschritten hat. Die zumindest eine zweite Sperreinrichtung ist vorzugsweise als eine Rückdrehsperreinrichtung ausgebildet, welche ein Zurückdrehen eines aufgedrehten Beutelanschlusselements verhindert.

Vorteilhaft ist die zumindest eine zweite Sperreinrichtung in Festlegerichtung hinter der zumindest einen ersten Sperreinrichtung angeordnet, so dass zwischen der zumindest einen ersten Sperreinrichtung und der zumindest einen zweiten Sperreinrichtung ein Manipulierbereich geschaffen wird, aber ein unbeabsichtigtes Entfernen des entsprechenden Beutelanschlusselements von dem zuvor angeordneten Beutelanschlusselement oder gegebenenfalls von einem Behälteranschlusselement des Behälters weiterhin verhindert beziehungsweise ausgeschlossen ist.

Bevorzugt ist die zumindest eine zweite Sperreinrichtung entriegelbar ausgebildet, so dass die miteinander verbundenen Beutelanschlusselemente beziehungsweise das mit einem Anschlusselement des Behälters verbundene Beutelanschlusselement aus der durch die zumindest eine zweite Sperreinrichtung definierte Sperrstellung relativ zueinander versetzbar sind.

Vorteilhaft weist die zumindest eine zweite Sperreinrichtung einen beim Zusammenführen zweier Beutelanschlusselemente betätigbaren Betätigungsabschnitt zum Entriegeln der zumindest einen zweiten Sperreinrichtung auf, womit die Entriegelung einfach ausführbar ist.

Vorzugsweise ist zumindest eine dritte Sperreinrichtung vorgesehen, die an dem Beutelanschlusselement angeordnet ist und welche eine weitere Position der miteinander verbundenen Beutelanschlusselemente beziehungsweise des mit einem Behälteranschlusselement des Behälters verbundene Beutelanschlusselements definiert. Sobald das entsprechende Beutelanschlusselement bei der Anordnung desselben diese zumindest eine dritte Sperreinrichtung überschritten hat, verhindert diese, dass das angeordnete Beutelanschlusselement unabsichtlich entfernt werden kann. Die zumindest eine dritte Sperreinrichtung ist vorzugsweise als eine Rückdrehsperreinrichtung ausgebildet, welche ein Zurückdrehen eines aufgedrehten Beutelanschlusselements verhindert.

Vorteilhaft ist die zumindest eine dritte Sperreinrichtung an dem Verbindungsabschnitt des Beutelanschlusselements angeordnet, was eine einfache Ausgestaltung des Beutelanschlusselements ermöglicht.

Weiter vorteilhaft ist die zumindest eine dritte Sperreinrichtung bei der zumindest einen zweiten Festlegeeinrichtung angeordnet, so dass die zumindest eine dritte Sperreinrichtung einfach mit der zumindest einen ersten Festlegeeinrichtung in Wirkverbindung bringbar ist.

Die dritte Sperreinrichtung wird beispielsweise durch ein freies Ende der zweiten Festlegeeinrichtung gebildet und umfasst vorteilhaft weiter eine Verzahnung, insbesondere eine Mikroverzahnung, die beispielsweise im zusammengeführten Zustand zweier Beutelanschlusselemente mit dem benachbarten Beutelanschlusselement in Anlage.

Bevorzugt ist ein Dichtabschnitt vorgesehen, der von dem Verbindungsabschnitt abragt und ein unerwünschtes Austreten des zu entleerenden beziehungsweise befüllenden Gutes in die Umgebung zusätzlich verhindert.

Vorteilhaft steht der Dichtabschnitt im zusammengeführten Zustand zweier Beutelanschlusselemente in dichtender Anlage mit dem benachbarten Beutelanschlusselement, womit die Sicherheit vor einer Kontaminierung der Umgebung durch das entleerende beziehungsweise befüllende Gut zusätzlich verbessert ist.

Vorzugsweise ist ein Dichtelement vorgesehen, das ein unerwünschtes Austreten des zu entleerenden beziehungsweise befüllenden Gutes in die Umgebung zusätzlich verhindert.

Vorteilhaft ist das Dichtelement im Bereich eines freien Endes des Dichtabschnitts vorgesehen, womit die Sicherheit vor einer Kontaminierung der Umgebung durch das entleerende beziehungsweise befüllende Gut zusätzlich verbessert ist.

Besonders vorteilhaft sind Positionsmarkierungen an dem Beutelanschlusselement vorgesehen, die dem Anwender die korrekte Positionierung zweier Beutelanschlusselemente relativ zueinander und damit das richtige Zusammenführen derselben erleichtern.

Das erfindungsgemässe Verfahren zum Anschluss eines Beutels an einem Behälter zum kontaminationsfreien Befüllen oder Entleeren des Beutels unter Verwendung von zumindest einem, zuvor dargelegten Beutelanschlusselement ist durch die folgenden Schritte gekennzeichnet.
a) Anordnen eines ersten Beutels mittels eines Halteelements in einem ersten Beutelanschlusselement, wobei das Halteelement mit einem ersten Beutelabschnitt des ersten Beutels vorteilhaft in der Halteaufnahme des ersten Beutelanschlusselements zu liegen kommt.
b) Festlegen des ersten Beutelanschlusselements mit dem ersten Beutel an einem Behälteranschlusselement eines Behälters.
c) Befüllen oder Entleeren des ersten Beutels.
d) Verschliessen des ersten Beutels, wobei dieser beispielsweise verschweisst oder mittels eines Verschlusselements verschlossen wird. Ein bevorzugtes Verschlusselement ist vorteilhaft als Klemmelement ausgebildet. Eine besonders bevorzugte Art von Verschlusselement ist ein sogenannter Clip-Verschluss und weiter vorteilhaft ein Clip-Verschluss gemäss der EP 2 468 651 A2 (Anmeldung der Anmelderin).
e) Abtrennen des ersten Beutels im Bereich des durch das Verschliessen geschaffenen Verschlussbereichs, wobei ein verschlossener erster Beutelabschnitt am Behälteranschlusselement des Behälters verbleibt.

Das erfindungsgemässe Verfahren zeichnet sich durch die einfache sowie sichere Handhabung aus. Dabei wird zu jeder Zeit eine Kontaminierung der Umgebung oder des Anwenders ausgeschlossen.

Vorzugsweise wird Schritt c), also vor dem Befüllen oder Entleeren des ersten Beutels, ein an dem Behälteranschlusselement des Behälters angeordnetes Verschlussteil entfernt. Das Verschlussteil ist beispielsweise ein Verschlussdeckel oder ein, beispielsweise verschlossener, Folienabschnitt, das eine beim Behälteranschlusselement des Behälters vorgesehene Entleerungsöffnung beziehungsweise Befüllungsöffnung des Behälters verschliesst. Vorteilhaft weist der erste Beutel zumindest eine Seitenhülse der bekannten Art auf, durch welche das Verschlussteil sicher und ohne Kontaminierung der Umgebung von dem Behälteranschlusselement des Behälters entnommen werden kann.

Bevorzugt ist das Verfahren durch die weiteren Schritte gekennzeichnet:
f) Anordnen eines zweiten Beutels mittels eines Halteelements in einem zweiten Beutelanschlusselement, wobei das Halteelement mit einem zweiten Beutelabschnitt des zweiten Beutels vorteilhaft in der Halteaufnahme des zweiten Beutelanschlusselements zu liegen kommt.
g) Festlegen des zweiten Beutelanschlusselements mit dem zweiten Beutel an dem ersten Beutelanschlusselement, wozu der Anschlussabschnitt des zweiten Beutelanschlusselements mit dem Verbindungsabschnitt des ersten Beutelanschlusselements verbunden wird.
h) teilweises Lösen des ersten Beutelanschlusselements von dem Behälteranschlusselement des Behälters, wobei das zuvor festgelegte Halteelement mit dem ersten Beutelabschnitt in eine entspannte Position kommt.
i) Entfernen des ersten Beutelabschnitts von dem Behälteranschlusselement des Behälters. Vorteilhaft weist der zweite Beutel zumindest eine Seitenhülse der bekannten Art auf, durch welche der erste Beutelabschnitt sicher und ohne Kontaminierung der Umgebung von dem Behälteranschlusselement des Behälters entnommen werden kann.
j) Erneutes Festlegen des ersten Beutelanschlusselements an dem Anschlusselement des Behälters, wobei wieder eine sichere Verbindung zwischen dem ersten Beutelanschlusselement und dem Anschlusselement des Behälters geschaffen wird.
k) Befüllen oder Entleeren des zweiten Beutels.
l) Verschliessen des zweiten Beutels, wobei dieser beispielsweise verschweisst oder mittels eines Verschlusselements verschlossen wird. Auch dieses Verschlusselement ist bevorzugt ein Klemmelement und besonders bevorzugt ein sogenannter Clip-Verschluss, insbesondere ein Clip-Verschluss gemäss der EP 2 468 651 A2 (Anmeldung der Anmelderin).
m) Abtrennen des zweiten Beutels im Bereich des durch das Verschliessen geschaffenen Verschlussbereichs, wobei ein verschlossener zweiter Beutelabschnitt an dem zweiten Beutelanschlusselement verbleibt und dessen Durchführöffnung sicher verschlossen wird.

Die weitere Entleerung beziehungsweise Befüllung des Behälters wird mit diesen zusätzlichen Verfahrensschritten bei einfacher sowie sicherer Handhabung gewährleistet. Dabei wird zu jeder Zeit eine Kontaminierung der Umgebung oder des Anwenders ausgeschlossen.

Vorzugsweise ist das Verfahren durch die weiteren Schritte gekennzeichnet:
n) Anordnen eines weiteren Beutels mittels eines Halteelements in einem weiteren Beutelanschlusselement, wobei das Halteelement mit einem weiteren Beutelabschnitt des weiteren Beutels vorteilhaft in der Halteaufnahme des weiteren Beutelanschlusselements zu liegen kommt.
o) Festlegen des weiteren Beutelanschlusselements mit dem weiteren Beutel an dem vorher angeordneten Beutelanschlusselement, wozu der Anschlussabschnitt des weiteren Beutelanschlusselements mit dem Verbindungsabschnitt des vorherangeordneten Beutelanschlusselements verbunden wird.
p) teilweises Lösen des vorher angeordneten Beutelanschlusselements von dem vor diesem angeordneten Beutelanschlusselement, wobei das zuvor festgelegte Halteelement mit dem entsprechenden Beutelabschnitt in eine entspannte Position kommt.
q) Entfernen des vorhandenen Beutelabschnitts von dem vorher angeordneten Beutelanschlusselement. Vorteilhaft weist der weitere Beutel zumindest eine Seitenhülse der bekannten Art auf, durch welche der erste Beutelabschnitt sicher und ohne Kontaminierung der Umgebung entnommen werden kann.
r) Erneutes Festlegen des vor dem vorher angeordneten Beutelanschlusselement an dem vor diesem angeordneten Beutelanschlusselement, wobei wieder eine sichere Verbindung zwischen dem vor dem vorher angeordneten Beutelanschlusselement und dem vor diesem angeordneten Beutelanschlusselement geschaffen wird.
s) Befüllen oder Entleeren des weiteren Beutels.
t) Verschliessen des weiteren Beutels, wobei dieser beispielsweise verschweisst oder mittels eines Verschlusselements verschlossen wird. Auch dieses Verschlusselement ist bevorzugt ein Klemmelement und besonders bevorzugt ein sogenannter Clip-Verschluss, insbesondere ein Clip-Verschluss gemäss der EP 2 468 651 A2 (Anmeldung der Anmelderin).
u) Abtrennen des weiteren Beutels im Bereich des durch das Verschliessen geschaffenen Verschlussbereichs, wobei ein verschlossener weiterer Beutelabschnitt am weiteren Beutelanschlusselement verbleibt und dessen Durchführöffnung sicher verschlossen ist.

Die weitere Entleerung beziehungsweise Befüllung des Behälters wird mit diesen zusätzlichen Verfahrensschritten bei einfacher sowie sicherer Handhabung gewährleistet. Dabei wird zu jeder Zeit eine Kontaminierung der Umgebung oder des Anwenders ausgeschlossen.

Bevorzugt werden die Schritte n) bis u) für jeden weiteren anzuschliessenden Beutel wiederholt, bis die gewünschte Gesamtmenge befüllt beziehungsweise entleert ist. Vorteilhaft werden die Schritte n) bis u) bis zur vollständigen Entleerung beziehungsweise Befüllung des Behälters wiederholt.

Vorzugsweise erfolgt der Schritt b), g) oder o) mittels einer ersten Festlegebewegung über einen ersten Festlegebereich in eine erste Festlegerichtung und der Schritt h) oder p) mittels einer zweiten Festlegebewegung über einen zweiten Festlegebereich in eine zweite, der ersten Festlegerichtung entgegengesetzte Festlegerichtung erfolgt, wobei der zweite Festlegebereich kleiner als der erste Festlegebereich ist. Damit wird sichergestellt, dass das Lösen des entsprechenden Beutelelements nicht zu einem vollständigen Abkoppeln desselben von dem Anschlussabschnitt des Behälters beziehungsweise des vorher angeordneten Beutelanschlusselements und somit zu einer unerwünschten Kontaminierung der Umgebung führt.

Werden die Beutelanschlusselemente über eine Drehbewegung, z. B. bei einem Gewinde oder einem Bajonettverschluss als Festlegeeinrichtungen, zusammengeführt, erfolgt der Schritt b), g) oder o) vorteilhaft mittels einer ersten Drehbewegung über einen ersten Winkelbereich in eine erste Drehrichtung und der Schritt h) oder p) mittels einer zweiten Drehbewegung über einen zweiten Winkelbereich in eine zweite, der ersten Drehrichtung entgegengesetzte Drehbewegung, wobei der zweite Winkelbereich kleiner als der erste Winkelbereich ist. Auch damit wird sichergestellt, dass das Lösen des entsprechenden Beutelelements nicht zu einem vollständigen Abkoppeln desselben von dem Anschlussabschnitt des Behälters beziehungsweise des vorher angeordneten Beutelanschlusselements und somit zu einer unerwünschten Kontaminierung der Umgebung führt.

Bevorzugt ist der erste Festlegebereich, insbesondere der erste Winkelbereich, durch die Position der zumindest einen zweiten Sperreinrichtung an dem Beutelanschlusselement definiert, so dass bei dem nachfolgenden Handling ein vollständiges Lösen des entsprechenden Beutelanschlusselements beziehungsweise von dem Anschlusselement des Behälters verhindert ist.

Vorteilhaft wird das Erreichen der zumindest einen zweiten Sperreinrichtung bei der Anordnung des entsprechenden Beutelanschlusselements akustisch und/oder taktil wahrnehmbar dem Anwender signalisiert, so dass dieser das Erreichen der entsprechenden Position während der Anordnung einfach wahrnehmen kann.

Vorzugsweise wird beim Zusammenführen zweier Beutelanschlusselemente die zweite Sperreinrichtung von einer Sperrstellung in eine Entsperrstellung überführt, so dass diese gelöst wird und eine Verbindung zwischen dem Beutelanschlusselement und dem zuvor angeordneten Beutelanschlusselement für ein weiteres Handling des zuvor angeordneten Beutelanschlusselements aufgehoben wird.

Bevorzugt ist der zweite Festlegebereich, insbesondere der zweite Winkelbereich, durch die Position der zumindest einen ersten Sperreinrichtung an dem Beutelanschlusselement relativ zu der zweiten Sperreinrichtung definiert, womit ein vollständiges Lösen des zuvor angeordneten Beutelanschlusselements verhindert ist.

Vorzugsweise erfolgt der Schritt j) oder r) mittels einer dritten Festlegebewegung, insbesondere einer dritten Drehbewegung, über einen dritten Festlegebereich in die erste Festlegerichtung, insbesondere einen dritten Winkelbereich in die erste Drehrichtung. Dadurch wird die Montage für den Anwender zusätzlich verbessert. Vorteilhaft ist der dritte Festlegebereich, insbesondere der dritte Winkelbereich, durch die Position der zumindest einen dritten Sperreinrichtung relativ zur ersten Sperreinrichtung an dem Beutelanschlusselement definiert, was die Handhabung des Beutelanschlusselements erleichtert.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: Ein erfindungsgemässes Beutelanschlusselement im Grundriss mit Blick auf den Verbindungsabschnitt;
- Fig. 2: eine zweite Rückdrehsperreinrichtung in einer Detailansicht entlang der Linie II-II in Fig. 1;
- Fig. 3: das Beutelanschlusselement gem. Fig. 1 in einer Seitenansicht;
- Fig. 4: eine Detailansicht auf eine erste Rückdrehsperreinrichtung (siehe Fig. 3);
- Fig. 5: das Beutelanschlusselement gem. Fig. 1 in einer Perspektive mit Blick auf den Anschlussabschnitt;
- Fig. 6: ein Detailschnitt des Beutelanschlusselements gem. Fig. 1 mit angeordnetem Beutel; und
- Fig. 7 bis 16: ein erfindungsgemässes Verfahren zum Anschluss eines Beutels an einem Behälter zum kontaminationsfreien Befüllen oder Entleeren des Beutels unter Verwendung von erfindungsgemässen Beutelanschlusselementen in mehreren Teilschritten, wobei einzelne Detailausschnitte vergrössert dargestellt sind (Fig. 7A, 8A, 10A bis 12A, 14A bis 16A).

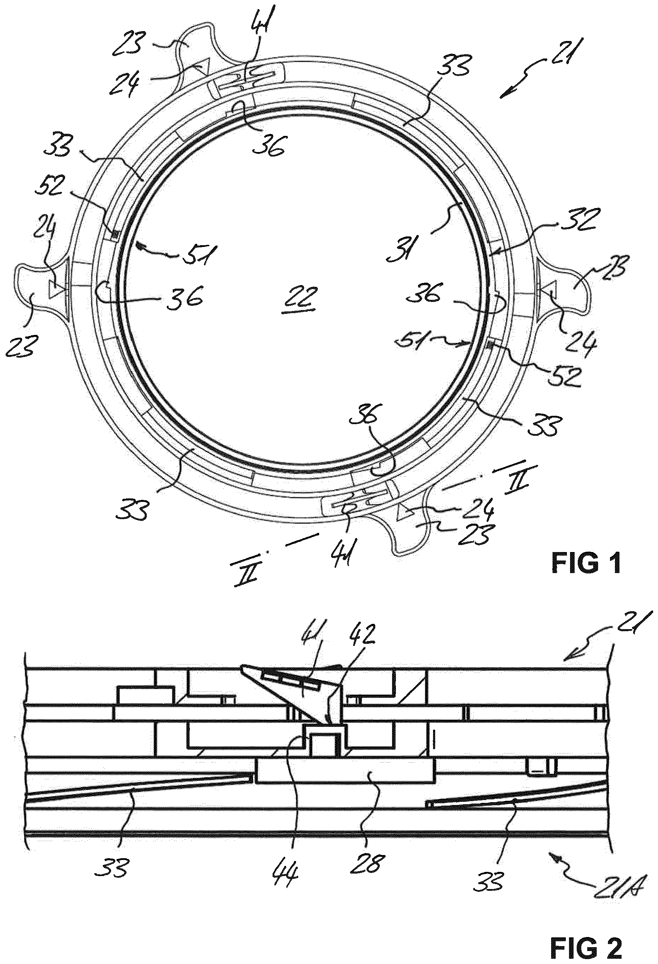

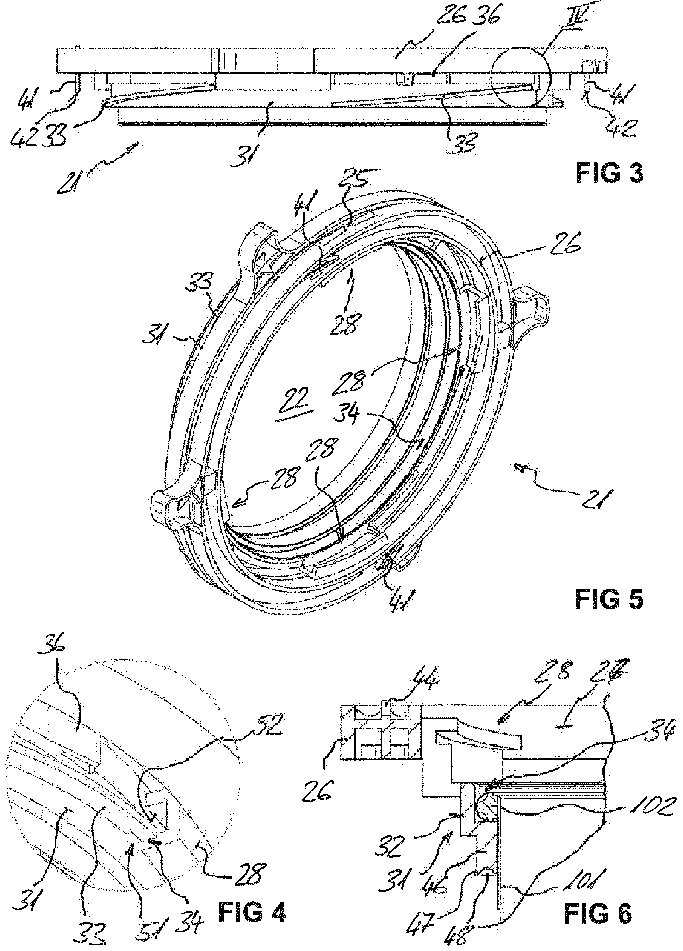

Das in den Figuren 1 bis 6 gezeigte Ausführungsbeispiel eines Beutelanschlusselements 21 zum Anschluss eines Beutels an einem Behälter zum kontaminationsfreien Befüllen oder Entleeren des Beutels weist eine ringförmige Grundgestalt mit einer Durchführöffnung 22 für das zu befüllende beziehungsweise zu entleerende Gut auf. Hier nicht dargestellt, aber eine mögliche Alternative stellt ein Beutelanschlusselement mit einer polygonalen Aussenkontur dar.

Von einer Seite des Beutelanschlusselements 21 ragt ein Anschlussabschnitt 26 ab, der an seiner Innenseite 27 eine erste Festlegeeinrichtung 28 aufweist.

Von der gegenüberliegenden Seite des Beutelanschlusselements 21 ragt ein Verbindungsabschnitt 31 ab, der an seiner Aussenseite 32 eine zweite Festlegeeinrichtung 33 aufweist, wobei die zweite Festlegeeinrichtung 33 komplementär zu der ersten Festlegeeinrichtung 28 ausgebildet ist. Weiter ist an der Innenseite des Verbindungsabschnitts 31 eine Halteaufnahme 34 zur Aufnahme eines Beutelabschnitts des Beutels 101, der mittels eines Halteelements 102, hier in Form eines elastischen O-Rings, in der Halteaufnahme 34 gehalten ist.

Die erste Festlegeeinrichtung 28 und die zweite Festlegeeinrichtung 33 sind als miteinander in Eingriff bringbare Teile eines Bajonettverschlusses ausgebildet. Die erste Festlegeeinrichtung 28 umfasst jeweils vier Bajonettkrallen, die gleichmässig zueinander beabstandet entlang des Umfangs an der Innenseite 27 des Anschlussabschnitts 26 angeordnet sind. Die zweite Festlegeeinrichtung 33 umfasst jeweils vier Gewindeabschnitte (Bajonettbahn), die gleichmässig zueinander beabstandet entlang des Umfangs an der Aussenseite 32 des Verbindungsabschnitts 31 angeordnet sind, so dass beim Zusammenführen von zwei Beutelanschlusselementen 21 die Bajonettkrallen zwischen den Gewindeabschnitten einführbar sind.

An dem Verbindungsabschnitt 31 des Beutelanschlusselements 21 ist jeweils eine erste Sperreinrichtung 36 vorgesehen, die hier als Rückdrehsperreinrichtung in Form einer Sperrlasche ausgebildet ist. Die erste Sperreinrichtung 36 ist jeweils bei der zweiten Festlegeeinrichtung 33, in einem dem Anschlussabschnitt 26 zugewandten Bereich vorgesehen. Die erste Sperreinrichtung 36 verriegelt unwiderruflich das zuvor angeordnete Beutelanschlusselement 21 mit dem weiteren an diesem angeordneten Beutelanschlusselement 21, sobald die erste Festlegeeinrichtung 28 über die Position der ersten Sperreinrichtung 36 geführt wird.

Weiter sind über den Umfang gleichmässig verteilt zwei zweite Sperreinrichtungen 41 vorgesehen, die hier als Rückdrehsperreinrichtung jeweils in Form eines Kipphebels ausgebildet sind. Die zweite Sperreinrichtung 41 ist mit einem vorher angeordneten Beutelanschlusselement 21 verriegelbar, sobald die erste Festlegeeinrichtung 28 über die Position der zweiten Sperreinrichtung 41 geführt wird. In Festlegerichtung, hier in Drehrichtung im Uhrzeigersinn, sind die zweiten Sperreinrichtung 41 hinter der ersten Sperreinrichtung 36 angeordnet. Die zweite Sperreinrichtung 41 ist jeweils entriegelbar ausgebildet und weist einen beim Zusammenführen zweier Beutelanschlusselemente 21 betätigbaren Betätigungsabschnitt 42 zum Entriegeln der zweiten Sperreinrichtung 41 auf. An der Seite des Beutelanschlusselements 21, die beim Zusammenführen zweier Beutelanschlusselemente 21 mit dem zuvor angeordneten Beutelanschlusselement 21 in Anlage kommt, ist ein Betätigungsvorsprung 44 vorgesehen, welcher zur Entriegelung der zweiten Sperreinrichtung 41 in der entsprechenden Position der beiden Beutelanschlusselemente 21 relativ zueinander, auf den Betätigungsabschnitt 42 einwirkt, so dass der Kipphebel um seine Kippachse verkippt und dadurch die zweite Sperreinrichtung 41 entriegelt wird.

An dem Verbindungsabschnitt 31 des Beutelanschlusselements 21 ist bei der zweiten Festlegeeinrichtung 33 jeweils eine dritte Sperreinrichtung 51 vorgesehen, die hier als Rückdrehsperreinrichtung ausgebildet ist. Die dritte Sperreinrichtung 51 wird hier durch ein freies Ende 34 der zweiten Festlegeeinrichtung 33 gebildet und umfasst zudem eine Mikroverzahnung 52, die an der dem Anschlussabschnitt 26 zugewandten Seite der zweiten Festlegeeinrichtung 33, benachbart zu dessen freien Ende 34 vorgesehen ist.

Von dem Verbindungsabschnitt 31 ragt ein Dichtabschnitt 46 ab, der im zusammengeführten Zustand zweier Beutelanschlusselemente 21, 21A in dichtender Anlage mit dem benachbarten Beutelanschlusselement 21A steht. Im Bereich eines freien Endes des Dichtabschnitts 46 ist ein Dichtelement 47 vorgesehen, das hier nach radial aussen abragt und eine Abdichtung zwischen zwei zusammengeführten Beutelanschlusselementen 21, 21A sicherstellt. Weiter ist an dem freien Endes des Dichtabschnitts 46 eine Dichtaufnahme 48 zur Aufnahme des Halteelements 102 für den Beutel 101 vorgesehen.

Von der äusseren Peripherie des Beutelanschlusselements 21 ragen über den Umfang verteilt, in diesem Ausführungsbeispiel vier, Betätigungsnasen 23 ab, die eine Betätigung des Beutelanschlusselements 21 vereinfachen. An den Betätigungsnasen 23 ist jeweils eine erste Positionsmarke 24 und an der äusseren Peripherie des Beutelanschlusselements 21 sind entsprechend positionierte zweite Positionsmarken 25 vorgesehen. Zum Zusammenführen zweier Beutelanschlusselemente 21 werden diese entsprechend der Positionsmarken 24 bzw. 25 relativ zueinander positioniert und dann mittels einer Festlegebewegung, hier einer Drehbewegung, miteinander verbunden.

Nachfolgend wird das erfindungsgemässe Verfahren zum Anschluss eines Beutels 101 an einem Behälter zum kontaminationsfreien Befüllen oder Entleeren des Beutels 101 unter Verwendung von erfindungsgemässen Beutelanschlusselementen 21 dargelegt.

Zuerst wird ein erster Beutel 101 mittels eines Halteelements 102 in einem ersten Beutelanschlusselement 21 angeordnet (Schritt a)).

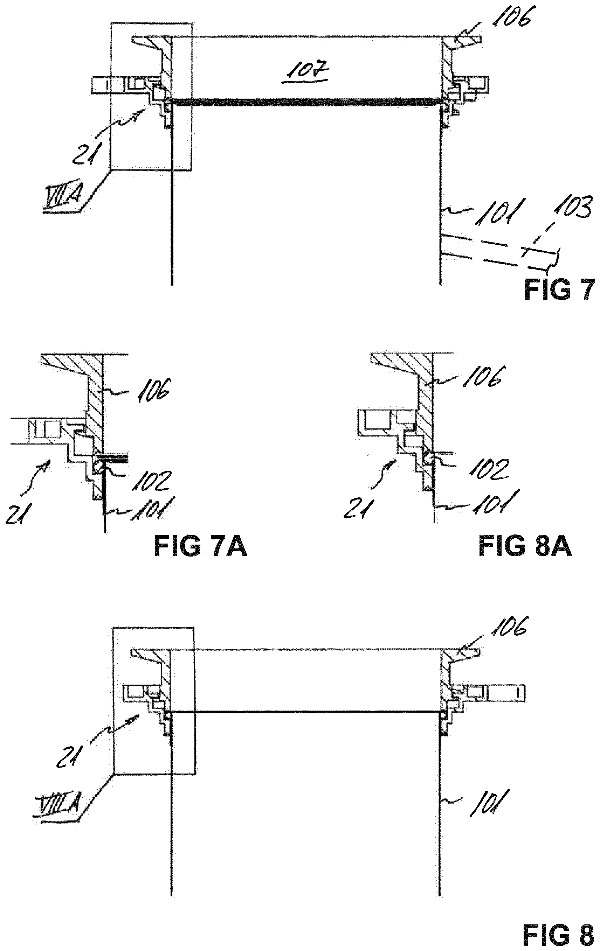

Dann wird das erste Beutelanschlusselement 21 mit dem ersten Beutel 101 an einem Behälteranschlusselement 106 eines Behälters festgelegt (Figs. 7 und 7A; Schritt b)). Das Behälteranschlusselement 106 des Behälters weist vorteilhaft zumindest eine Festlegeeinrichtung auf, die komplementär zu der ersten Festlegeeinrichtung 28 am Anschlussabschnitt 26 des Beutelanschlusselements 21 ausgebildet ist. Weiter sind vorteilhaft an dem Behälteranschlusselement 106 ebenfalls zumindest eine erste Sperreinrichtung (analog zu der ersten Sperreinrichtung 36 des Beutelanschlusselements 21 ausgebildet) und eine dritte Sperreinrichtung (analog zu der dritten Sperreinrichtung 51 des Beutelanschlusselements 21 ausgebildet) vorgesehen.

Zum Festlegen des ersten Beutelanschlusselements 21 wird dieses auf das Behälteranschlusselement 106 des Behälters geschoben und um einen ersten Festlegebereich geführt, hier um einen ersten Winkelbereich gedreht, so dass die erste Festlegeeinrichtung 28 und die zweite Festlegeeinrichtung 33 miteinander in Eingriff kommen. Der erste Festlegebereich, hier der erste Winkelbereich, ist durch die Position der zweiten Sperreinrichtung 41 an dem Beutelanschlusselement 21 relativ zur Position, in welcher das Beutelanschlusselement 21 mit dem Behälteranschlusselement 106 des Behälters beziehungsweise zwei Beutelanschlusselemente 21 miteinander zusammenführbar sind, definiert. In diesem Beispiel beträgt dieser erste Winkelbereich 17° bis 30°, vorteilhaft 20° bis 28°. Das Erreichen der zweiten Sperreinrichtung 41 wird bei der Anordnung des entsprechenden Beutelanschlusselements 21 vorteilhaft akustisch und/oder taktil wahrnehmbar dem Anwender signalisiert.

In dieser Stellung ist das Halteelement 102 in einer Aufnahme eines Dichtabschnitts des Behälteranschlusselements 106 des Behälters aufgenommen, die vorteilhaft analog der Aufnahme 48 des Dichtabschnitts 46 des Beutelanschlusselements 21 ausgebildet ist. Weiter wird das Halteelement 102 leicht komprimiert, so dass eine vollständige Dichtigkeit zwischen dem Behälteranschlusselement 106 des Behälters und dem Beutelanschlusselement 21 gegeben ist (Figs. 8 und 8A). Vorteilhaft weist auch das Behälteranschlusselement 106 des Behälters ein zusätzliches Dichtelement, vorteilhaft im Bereich des freien Endes seines Dichtabschnitts auf.

Nun wird der erste Beutel 101 befüllt oder entleert (Schritt c)). Sofern die Öffnung 107 des Behälteranschlusselement 106 des Behälters mit einem Verschlussteil verschlossen ist, wird dieses vorgängig entfernt. Der Beutel 101 weist dafür beispielsweise eine Seitenhülse 103 der bekannten Art auf, welche eine kontaminationsfreie Entfernung des allfällig vorhandenen Verschlussteils ermöglicht.

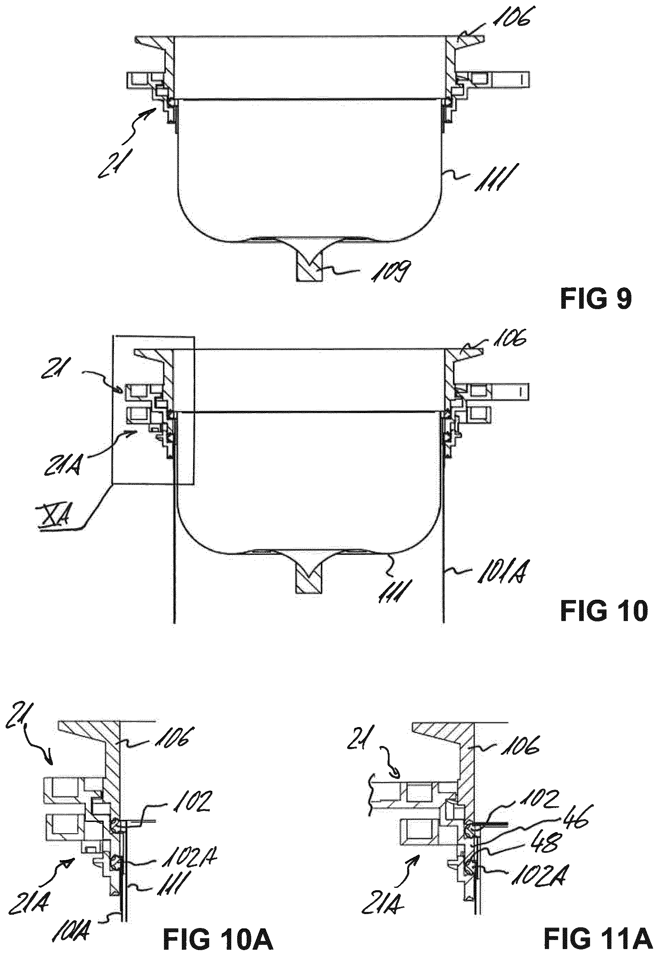

Nachdem die gewünschte Menge des zu entleerenden oder zu befüllenden Gutes ausgebracht wurde, wird der Beutel 101 mittels eines Verschlusselements 109, vorteilhaft eines Clip-Verschlusselements, verschlossen (Schritt d)) und im Bereich des durch das Verschliessen geschaffenen Verschlussbereichs des Verschlusselements 109 abgetrennt, so dass ein erster verschlossener Beutelabschnitt 111 an dem Behälteranschlusselement 106 des Behälters verbleibt (Fig. 9; Schritt e)).

Um eine weitere Menge des Gutes zu entleeren beziehungsweise zu befüllen wird nun ein zweiter Beutel 101A mittels eines Halteelements 102A in einem zweiten Beutelanschlusselement 21A angeordnet (Schritt f)). Das zweite Beutelanschlusselement 21A ist analog dem ersten Beutelanschlusselement 21 ausgebildet.

Das zweite Beutelanschlusselement 21A wird mit dem zweiten Beutel 101A an dem ersten Beutelanschlusselement 21 festgelegt (Figs. 10 und 10A; Schritt g)). Dazu wird das zweite Beutelanschlusselement 21A an dem ersten Beutelanschlusselement 21 ausgerichtet - vorteilhaft mit Hilfe der Positionsmarken 24 bzw. 25 - positioniert und um einen ersten Festlegebereich geführt, hier um einen ersten Winkelbereich gedreht, so dass die erste Festlegeeinrichtung 28 und die zweite Festlegeeinrichtung 33 miteinander in Eingriff kommen. Dieser erste Festlegebereich beziehungsweise dieser erste Winkelbereich entspricht dem ersten Festlegebereich beziehungsweise dem ersten Winkelbereich, wie er bei der Festlegung des ersten Beutelanschlusselements 21 an dem Behälteranschlusselement 106 des Behälters definiert ist. In diesem Beispiel beträgt dieser erste Winkelbereich entsprechend 17°bis 30°, vorteilhaft 20°bis 28°. Das Erreichender zweiten Sperreinrichtung 41 wird bei der Anordnung des entsprechenden Beutelanschlusselements 21A vorteilhaft akustisch und/oder taktil wahrnehmbar dem Anwender signalisiert.

In dieser Stellung ist das Halteelement 102A in der Aufnahme 48 des Dichtabschnitts 46 aufgenommen und wird leicht komprimiert, so dass eine vollständige Dichtigkeit zwischen den Beutelanschlusselementen 21 und 21A gegeben ist (Figs. 10 und 10A).

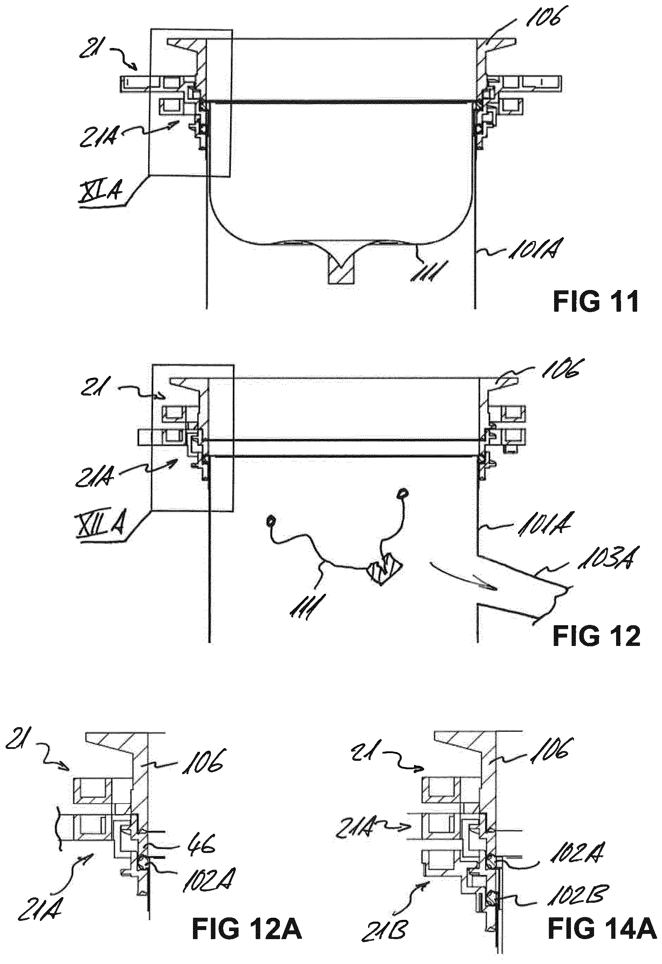

Nun wird das erste Beutelanschlusselement 21 von dem Behälteranschlusselement 106 des Behälters teilweise gelöst, indem dieses mit einer zweiten Festlegebewegung, hier mit einer zweiten Drehbewegung über einen zweiten Winkelbereich in eine zweite, der ersten Drehrichtung entgegengesetzte Drehrichtung, in diesem Beispiel im Gegenuhrzeigersinn, gedreht wird (Figs. 11 und 11A; Schritt h)). In dieser Stellung wird die temporäre Fixierung des Halteelements 102 zwischen dem ersten Beutelanschlusselements 21 und dem Behälteranschlusselement 106 des Behälters aufgehoben. Infolge der Verriegelung der Beutelanschlusselemente 21 und 21A über die zweite Sperreinrichtung 41 des zweiten Beutelanschlusselements 21A wird das zweite Beutelanschlusselement 21A beim Lösen des ersten Beutelanschlusselements 21 mitrotiert, so dass die dichte Verbindung zwischen den Beutelanschlusselementen 21 und 21A erhalten bleibt.

Der zweite Winkelbereich beträgt in diesem Beispiel 7° bis 15°, vorteilhaft 8° bis 11 ° und ist somit kleiner als der erste Winkelbereich. Der zweite Winkelbereich und somit das Lösen wird durch die erste Sperreinrichtung 36 begrenzt, so dass zwar die temporäre Fixierung des Halteelements 102 aufgehoben aber die Abschottung zur Umgebung nicht aufgeboben wird. Der maximale Wert des zweiten Festlegebereichs, hier des zweiten Winkelbereichs, ist somit durch die Position der ersten Sperreinrichtung 36 an dem entsprechenden Beutelanschlusselement 21 relativ zu der zweiten Sperreinrichtung 41 definiert.

Dann wird der erste Beutelabschnitt 111 von dem Behälteranschlusselement 106 des Behälters, vorteilhaft kontaminierungsfrei durch eine Seitenhülse 103A des zweiten Beutels 101A, entfernt (Fig. 12; Schritt i)).

Anschliessend wird das erste Beutelanschlusselement 21 erneut an dem Behälteranschlusselement 106 des Behälters festgelegt, wobei die Halteaufnahme 34 mit dem Dichtabschnitt des Behälteranschlusselements 106 des Behälters vorteilhaft in Anlage kommt (Figs. 12 und 12A; Schritt j)). Dazu wird das erste Beutelanschlusselement 21 mittels einer dritten Festlegebewegung über einen dritten Festlegebereich geführt, hier mittels einer dritten Drehbewegung über einen dritten Winkelbereich in die erste Drehrichtung verdreht. Vorteilhaft erfolgt die Festlegebewegung beziehungsweise die Drehbewegung bis eine vorteilhaft auch an dem Behälteranschlusselement 106 des Behälters vorgesehene dritte Sperreinrichtung 51 überschritten wird. Über diese dritte Sperreinrichtung 51 sind das erste Beutelanschlusselement 21 mit dem Behälteranschlusselement 106 des Behälters verriegelt.

Der dritte Festlegebereich beziehungsweise der dritte Winkelbereich ist durch die Position der dritten Sperreinrichtung relativ zur ersten Sperreinrichtung 36 definiert. In diesem Beispiel beträgt dieser dritte Winkelbereich entsprechend 30° bis 70°, vorteilhaft 40° bis 50°.

Nun wird der zweite Beutel 101A befüllt oder entleert (Schritt k)).

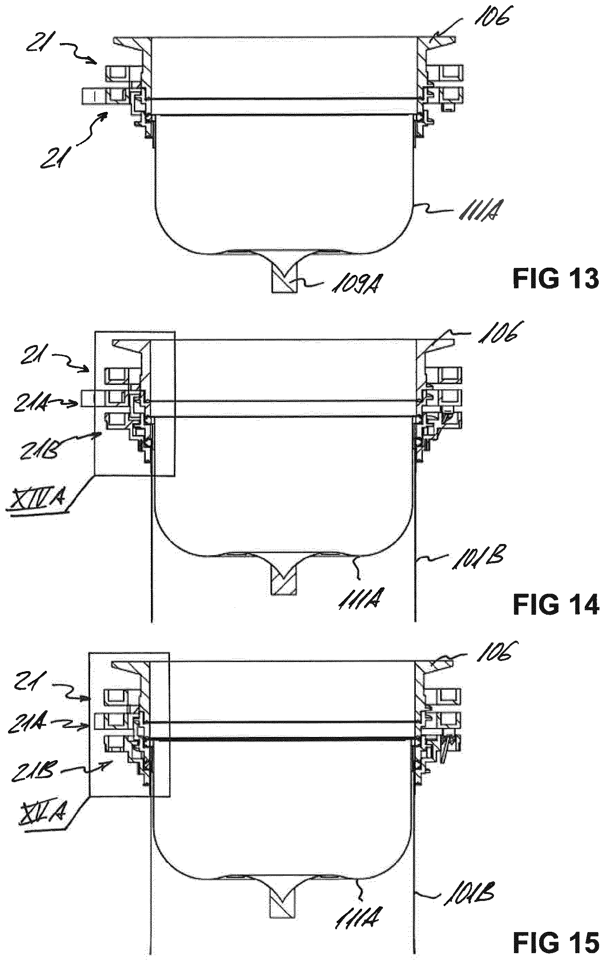

Nachdem die gewünschte Menge des zu entleerenden oder zu befüllenden Gutes ausgebracht wurde, wird der zweite Beutel 101A mittels eines Verschlusselements 109A, vorteilhaft eines Clip-Verschlusselements, verschlossen (Schritt l)) und im Bereich des durch das Verschliessen geschaffenen Verschlussbereichs des Verschlusselements 109A abgetrennt, so dass ein zweiter verschlossener Beutelabschnitt 111A an dem zweiten Beutelanschlusselement 21A verbleibt (Fig. 13; Schritt m)).

Um eine weitere Menge des Gutes zu entleeren beziehungsweise zu befüllen wird nun ein dritter Beutel 101B mittels eines Halteelements 102B in einem dritten Beutelanschlusselement 21B angeordnet (Schritt n)). Das dritte Beutelanschlusselement 21B ist analog dem ersten Beutelanschlusselement 21 beziehungsweise dem zweiten Beutelanschlusselement 21A ausgebildet.

Das dritte Beutelanschlusselement 21B wird mit dem dritten Beutel 101B an dem zweiten Beutelanschlusselement 21A festgelegt (Figs. 14 und 14A; Schritt o)). Die Festlegung des dritten Beutelanschlusselements 21B erfolgt analog der Festlegung des zweiten Beutelanschlusselements 21A an dem ersten Beutelanschlusselements 21, weshalb auf diese verwiesen wird. In dieser Stellung ist das Halteelement 102B in der Aufnahme 48 des Dichtabschnitts 46 des zweiten Beutelanschlusselements 21A aufgenommen und wird leicht komprimiert, so dass eine vollständige Dichtigkeit zwischen den Beutelanschlusselementen 21A und 21B gegeben ist.

Bei der Anordnung des dritte Beutelanschlusselements 21B an dem zweiten Beutelanschlusselements 21A wirkt dessen Betätigungsvorsprung 44 auf den Betätigungsabschnitt 42 der zweiten Sperreinrichtung 41 des zweiten Beutelanschlusselements 21A ein, so dass der Kipphebel um seine Kippachse verkippt und dadurch die durch die zweite Sperreinrichtung 41 geschaffene Verriegelung zwischen dem zweiten Beutelanschlusselement 21A und dem ersten Beutelanschlusselement 21 entriegelt wird. Die Verriegelung infolge der dritten Sperreinrichtung 51 zwischen dem ersten Beutelanschlusselement 21 und dem Behälteranschlusselement 106 des Behälters bleibt jedoch aufrecht.

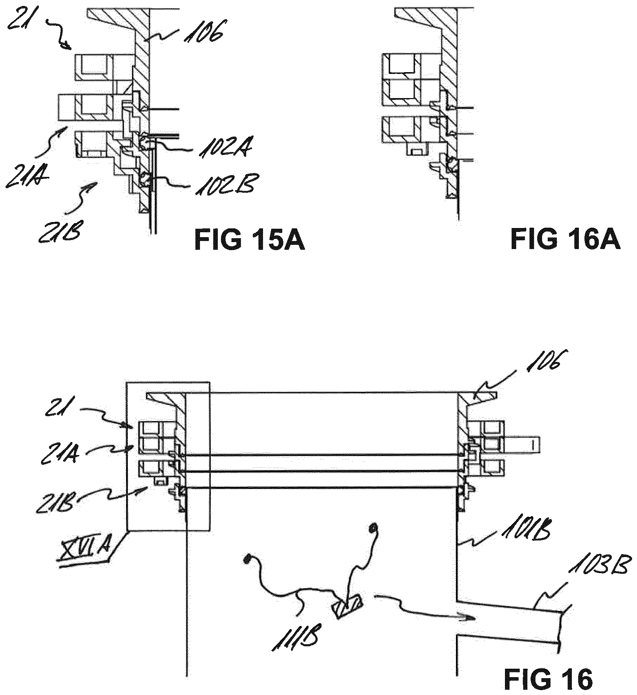

Nun wird das zweite Beutelanschlusselement 21A von dem ersten Beutelanschlusselement 21 teilweise gelöst, indem dieses mit einer zweiten Drehbewegung über den zweiten Winkelbereich in die zweite Drehrichtung, in diesem Beispiel im Gegenuhrzeigersinn, gedreht wird (Figs. 15 und 15A; Schritt p)). In dieser Stellung wird die temporäre Fixierung des Halteelements 102A zwischen dem ersten Beutelanschlusselement 21 und dem zweiten Beutelanschlusselement 21A aufgehoben. Infolge der Verriegelung des zweiten Beutelanschlusselements 21A mit dem dritten Beutelanschlusselement 21B über die zweite Sperreinrichtung 41 des dritten Beutelanschlusselements 21B wird das dritte Beutelanschlusselement 21B beim Lösen des zweiten Beutelanschlusselements 21A mitrotiert, so dass die dichte Verbindung zwischen dem zweiten Beutelanschlusselement 21A und dem dritten Beutelanschlusselement 21B erhalten bleibt.

Dann wird der zweite Beutelabschnitt 111A vorteilhaft kontaminierungsfrei durch eine Seitenhülse 103B des dritten Beutels 101B, entfernt (Fig. 16; Schritt q)).

Anschliessend wird das zweite Beutelanschlusselement 21A erneut an dem ersten Beutelanschlusselement 21 festgelegt, wobei die Halteaufnahme 34 des zweiten Beutelanschlusselements 21A mit dem Dichtabschnitt 46 des ersten Beutelanschlusselements 21 vorteilhaft in Anlage kommt (Figs. 16 und 16A; Schritt r)). Dazu wird das zweite Beutelanschlusselement 21A mittels der Festlegebewegung über den dritten Festlegebereich geführt, hier mittels der Drehbewegung über den dritten Winkelbereich in die erste Drehrichtung verdreht, vorteilhaft bis die an dem ersten Beutelanschlusselement 21 vorgesehene dritte Sperreinrichtung 51 überschritten wird. Nun ist das zweite Beutelanschlusselement 21A mit dem ersten Beutelanschlusselement 21 verriegelt.

Nun wird der dritte Beutel 101B befüllt oder entleert (Schritt s)).

Nachdem die gewünschte Menge des zu entleerenden oder zu befüllenden Gutes ausgebracht wurde, wird der dritte Beutel 101B mittels eines Verschlusselements, vorteilhaft eines Clip-Verschlusselements, verschlossen (Schritt t)) und im Bereich des durch das Verschliessen geschaffenen Verschlussbereichs des Verschlusselements abgetrennt, so dass ein dritter verschlossener Beutelabschnitt an dem dritten Beutelanschlusselement 21B verbleibt (Schritt u)).

Die Schritte n) bis u) werden für jeden weiteren anzuschliessenden Beutel, vorteilhaft bis zur vollständigen Entleerung beziehungsweise Befüllung des Behälters, wiederholt. Dabei verlängern die zusammengeführten Beutelanschlusselemente 21 das Behälteranschlusselement 106 des Behälters, ohne den Entleerungsvorgang beziehungsweise Befüllungsvorgang zu behindern. Gleichzeitig ist eine vorteilhafte Dichtigkeit zur Umgebung zu jeder Zeit des Verfahrens gegeben.

Nach der Reinigung des Systems oder zu der Reinigung des Systems wird das an dem Behälteranschlusselement 106 des Behälters festgelegte Beutelanschlusselement 21 sowie die weiteren vorhandenen Beutelanschlusselemente 21A, 21B entfernt. Insbesondere wenn an dem Behälteranschlusselement 106 des Behälters eine dritte Sperreinrichtung vorgesehen ist und somit das Beutelanschlusselement 21 mit dem Behälteranschlusselement 106 des Behälters verriegelt ist, wird diese Verriegelung vorteilhaft mit Hilfe eines entsprechend ausgebildeten Werkzeugs (hier nicht dargestellt) aufgehoben. Anschliessend können alle Beutelanschlusselemente 21, 21A und 21B gleichzeitig von dem Behälteranschlusselement 106 des Behälters demontiert werden.

**Bezugszeichenliste**

| | | | |
|---|---|---|---|
| 21 | Beutelanschlusselement | 101 | Beutel |
| 22 | Durchführöffnung | 102 | Halteelement |
| 23 | Betätigungsnase | 103 | Seitenhülse |
| 24 | Positionsmarke | | |
| 25 | Positionsmarke | | |
| 26 | Anschlussabschnitt | | |
| 27 | Innenseite v. 26 | | |
| 28 | 1. Festlegeeinrichtung | | |
| | | | |
| 31 | Verbindungsabschnitt | | |
| 32 | Aussenseite v. 31 | | |
| 33 | 2. Festlegeeinrichtung | | |
| 34 | Halteaufnahme | | |
| | | | |
| 36 | 1. Sperreinrichtung | | |
| | | | |
| 41 | 2. Sperreinrichtung | | |
| 42 | Betätigungsabschnitt | | |
| | | | |
| 44 | Betätigungsvorsprung | | |
| | | | |
| 46 | Dichtabschnitt | | |
| 47 | Dichtelement | | |
| 48 | Dichtaufnahme | | |
| | | | |
| 51 | 3. Sperreinrichtung | | |
| 52 | Mikroverzahnung | | |

## Patentansprüche

1. Beutelanschlusselement zum Anschluss eines Beutels (101, 101A, 101B) an einem Behälter zum kontaminationsfreien Befüllen oder Entleeren des Beutels (101, 101A, 101B) mit einer Durchführöffnung (22) für das zu befüllende beziehungsweise zu entleerende Gut, mit einem Anschlussabschnitt (26), der zumindest eine erste Festlegeeinrichtung (28) aufweist, mit einer Halteaufnahme (34) zur Aufnahme eines Beutelabschnitts des Beutels (101, 101A, 101B), wobei der Beutel (101, 101A, 101B), vorteilhaft mittels eines Halteelements (102, 102A, 102B), in der Halteaufnahme (34) gehalten ist **dadurch gekennzeichnet, dass** die zumindest eine erste Festlegeeinrichtung (28) zum Zusammenführen mit einem weiteren Beutelanschlusselement oder zum Festlegen an einem Behälteranschlusselement (106) eines Behälters geeignet ist und dass ein Verbindungsabschnitt (31), der zumindest eine zweite Festlegeeinrichtung (33) zum Zusammenführen des Beutelanschlusselements mit einem weiteren Beutelanschlusselement aufweist, wobei die zumindest eine zweite Festlegeeinrichtung (33) komplementär zu der zumindest einen ersten Festlegeeinrichtung (28) ausgebildet ist, vorhanden ist.

2. Beutelanschlusselement nach Anspruch 1, **dadurch gekennzeichnet, dass** die zumindest eine erste Festlegeeinrichtung (28) und die zumindest eine zweite Festlegeeinrichtung (33) als miteinander in Eingriff bringbare Teile eines Bajonettverschlusses ausgebildet sind.

3. Beutelanschlusselement nach Anspruch 1 oder 2, **dadurch gekennzeichnet, dass** zumindest eine erste Sperreinrichtung (36), insbesondere eine Rückdrehsperreinrichtung, vorgesehen ist, die an dem Beutelanschlusselement (21, 21A, 21B) angeordnet ist, vorteilhaft an dem Verbindungsabschnitt (31) des Beutelanschlusselements (21, 21A, 21B) und weiter vorteilhaft bei der zumindest einen zweiten Festlegeeinrichtung (33) angeordnet ist.

4. Beutelanschlusselement nach einem der Ansprüche 1 bis 3, **dadurch gekennzeichnet, dass** zumindest eine zweite Sperreinrichtung (41), insbesondere eine Rückdrehsperreinrichtung, vorgesehen ist, die mit einem vorher angeordneten Beutelanschlusselement (21, 21A) verriegelbar ist und vorteilhaft in Festlegerichtung hinter der zumindest einen ersten Sperreinrichtung (36) angeordnet ist, wobei die zumindest eine zweite Sperreinrichtung (41) vorzugsweise entriegelbar ausgebildet ist und vorteilhaft einen beim Zusammenführen zweier Beutelanschlusselemente (21, 21A, 21B) betätigbaren Betätigungsabschnitt (44) zum Entriegeln der zumindest einen zweiten Sperreinrichtung (41) aufweist.

5. Beutelanschlusselement nach einem der Ansprüche 1 bis 4, **dadurch gekennzeichnet, dass** zumindest eine dritte Sperreinrichtung (51), insbesondere eine Rückdrehsperreinrichtung, vorgesehen ist, die an dem Beutelanschlusselement (21, 21A, 21B) angeordnet ist, vorteilhaft an dem Verbindungsabschnitt (31) des Beutelanschlusselements (21, 21A, 21B) und weiter vorteilhaft bei der zumindest einen zweiten Festlegeeinrichtung (33) angeordnet ist.

6. Beutelanschlusselement nach einem der Ansprüche 1 bis 5, **dadurch gekennzeichnet, dass** ein Dichtabschnitt (46) vorgesehen ist, der von dem Verbindungsabschnitt (31) abragt und vorteilhaft im zusammengeführten Zustand zweier Beutelanschlusselemente (21, 21A, 21B) in dichtender Anlage mit dem benachbarten Beutelanschlusselement (21, 21A) steht, wobei weiter vorteilhaft zumindest ein Dichtelement (47), vorteilhaft im Bereich eines freien Endes des Dichtabschnitts (46), vorgesehen ist.

7. Verfahren zum Anschluss eines Beutels (101, 101A, 101B) an einem Behälter zum kontaminationsfreien Befüllen oder Entleeren des Beutels (101, 101A, 101B) mit den folgenden Schritten:
a) Anordnen eines ersten Beutels (101) mittels eines Halteelements (102) in einem ersten Beutelanschlusselement (21);
b) Festlegen des ersten Beutelanschlusselements (21) mit dem ersten Beutel (101) an einem Behälteranschlusselement (106) eines Behälters;
c) Befüllen oder Entleeren des ersten Beutels (101);
d) Verschliessen des ersten Beutels (101); und
e) Abtrennen des ersten Beutels (101) im Bereich des durch das Verschliessen geschaffenen Verschlussbereichs, wobei ein verschlossener erster Beutelabschnitt (111) am Behälteranschlusselement (106) verbleibt;
**gekennzeichnet durch** die Verwendung von zumindest einem Beutelanschlusselement (21, 21A, 21B) nach einem der Ansprüche 1 bis 6.

8. Verfahren nach Anspruch 7, **dadurch gekennzeichnet, dass** vor dem Befüllen oder Entleeren des ersten Beutels (101) (Schritt c)) ein an dem Behälteranschlusselement (106) des Behälters angeordnetes Verschlussteil entfernt wird.

9. Verfahren nach Anspruch 7 oder 8, **gekennzeichnet durch** die weiteren Schritte:
f) Anordnen eines zweiten Beutels (101A) mittels eines Halteelements (102A) in einem zweiten Beutelanschlusselement (21A);
g) Festlegen des zweiten Beutelanschlusselements (21A) mit dem zweiten Beutel (101A) an dem ersten Beutelanschlusselement (21);
h) teilweises Lösen des ersten Beutelanschlusselements (21) von dem Behälteranschlusselement (106) des Behälters;
i) Entfernen des ersten Beutelabschnitts (111) von dem Behälteranschlusselement (106) des Behälters;
j) Erneutes Festlegen des ersten Beutelanschlusselements (21) an dem Behälteranschlusselement (106) des Behälters;
k) Befüllen oder Entleeren des zweiten Beutels (101A);
l) Verschliessen des zweiten Beutels (101A); und
m) Abtrennen des zweiten Beutels (101A) im Bereich des **durch** das Verschliessen geschaffenen Verschlussbereichs, wobei ein verschlossener zweiter Beutelabschnitt (111A) am zweiten Beutelanschlusselement (21A) verbleibt.

10. Verfahren nach Anspruch 9, **gekennzeichnet durch** die weiteren Schritte:
n) Anordnen eines weiteren Beutels (101B) mittels eines Halteelements (102B) in einem weiteren Beutelanschlusselement (21B);
o) Festlegen des weiteren Beutelanschlusselements (21B) mit dem weiteren Beutel (101B) an dem vorher angeordneten Beutelanschlusselement (21A);
p) teilweises Lösen des vorher angeordneten Beutelanschlusselements (21A) von dem vor diesem angeordneten Beutelanschlusselement (21);
q) Entfernen des vorhandenen Beutelabschnitts (111A) von dem vorher angeordneten Beutelanschlusselement (21);
r) Erneutes Festlegen des vor dem vorher angeordneten Beutelanschlusselements (21A) an dem vor diesem angeordneten Beutelanschlusselement (21);
s) Befüllen oder Entleeren des weiteren Beutels (101B);
t) Verschliessen des weiteren Beutels (101B); und
u) Abtrennen des weiteren Beutels (101B) im Bereich des **durch** das Verschliessen geschaffenen Verschlussbereichs, wobei ein verschlossener weiterer Beutelabschnitt (111B) am weiteren Beutelanschlusselement (21B) verbleibt.

11. Verfahren nach Anspruch 10, **dadurch gekennzeichnet, dass** die Schritte n) bis u) für jeden weiteren anzuschliessenden Beutel, vorteilhaft bis zur vollständigen Entleerung beziehungsweise Befüllung des Behälters, wiederholt werden.

12. Verfahren nach einem der Ansprüche 9 bis 11, **dadurch gekennzeichnet, dass** das der Schritt b), g) oder o) mittels einer ersten Festlegebewegung, insbesondere mittels einer ersten Drehbewegung, über einen ersten Festlegebereich in eine erste Festlegerichtung, insbesondere einen ersten Winkelbereich in eine erste Drehrichtung, und der Schritt h) oder p) mittels einer zweiten Festlegebewegung über einen zweiten Festlegebereich in eine zweite, der ersten Festlegerichtung entgegengesetzte Festlegerichtung, insbesondere mittels einer zweiten Drehbewegung über einen zweiten Winkelbereich in eine zweite, der ersten Drehrichtung entgegengesetzte Drehbewegung, erfolgt, wobei der zweite Festlegebereich, insbesondere zweite Winkelbereich, kleiner als der erste Festlegebereich, insbesondere der erste Winkelbereich, ist.

13. Verfahren nach Anspruch 12, **dadurch gekennzeichnet, dass** der erste Festlegebereich, insbesondere der erste Winkelbereich, durch die Position der zweiten Sperreinrichtung (41) an dem Beutelanschlusselement (21, 21A, 21B) definiert ist und vorteilhaft das Erreichen der zweiten Sperreinrichtung (41) bei der Anordnung des entsprechenden Beutelanschlusselements (21, 21A, 21B) akustisch und/oder taktil wahrnehmbar dem Anwender signalisiert wird.

14. Verfahren nach Anspruch 12 oder 13, **dadurch gekennzeichnet, dass** beim Zusammenführen zweier Beutelanschlusselemente (21, 21A, 21B) die zweite Sperreinrichtung (41) von einer Sperrstellung in eine Entsperrstellung überführt wird.

15. Verfahren nach einem der Ansprüche 12 bis 14, **dadurch gekennzeichnet, dass** der zweite Festlegebereich, insbesondere der zweite Winkelbereich durch die Position der ersten Sperreinrichtung (36) an dem Beutelanschlusselement (21, 21A, 21B) relativ zu der zweiten Sperreinrichtung (41) definiert ist.

16. Verfahren nach einem der Ansprüche 12 bis 15, **dadurch gekennzeichnet, dass** das der Schritt j) oder r) mittels einer dritten Festlegebewegung, insbesondere mittels einer dritten Drehbewegung über einen dritten Festlegebereich in die erste Festlegerichtung, insbesondere einen dritten Winkelbereich in die erste Drehrichtung, erfolgt, wobei vorteilhaft der dritte Festlegebereich, insbesondere der dritte Winkelbereich, durch die Position der dritten Sperreinrichtung (51) relativ zur ersten Sperreinrichtung (36) definiert ist.

## Claims

1. A bag connecting element for the connection of a bag (101, 101A, 101 B) to a container for the contamination-free filling or emptying of the bag (101, 101 A, 101 B) having a through-opening (22) for the material to be filled or to be emptied, with a connection section (26) having at least one first fixing means (28), with a holder (34) for receiving a bag section of the bag (101, 101A, 101B)wherein the bag (101, 101A, 101B) is advantageously held in the holder (34) by means of a holding element (102, 102A, 102B) **characterised in that** the at least one first fixing means (28) is suitable for joining with a further bag connecting element or for fixing to container connecting element (106) of a container and **in that** a connecting section (31) is present which has at least one second fixing means (33) for joining the bag connecting element with a further bag connecting element, wherein the at least one second fixing means (33) is designed to complement the at least one first fixing means (28).

2. The bag connecting element according to claim 1, **characterised in that** the at least one first fixing means (28) and the at least one second fixing means (33) are designed as parts of a bayonet closure that can be brought into engagement with each other.

3. The bag connecting element according to claim 1 or 2, **characterised in that** at least one first locking device (36), more particularly a reversing lock device, is provided which is arranged on the bag connecting element (21, 21A, 21B), advantageously on the connecting section (31) of the bag connecting element (21, 21A, 21B) and also advantageously at the at least one second fixing means (33).

4. The bag connecting element according to any of claims 1 to 3, **characterised in that** at least one second locking device (41), preferably a reverse lock device, is provided, which can be locked with a previously arranged bag connecting element (21, 21A) and is advantageously arranged in the fixing direction behind the at least one locking device (36), wherein the at least one second locking device (31) is preferably designed in an unlocking manner and advantageously has an operating section (44) operable in the case of joining two bag connecting elements (21, 21A, 21B) for unlocking the at least one second locking device (41).

5. The bag connecting element according to claim 1 to 4, **characterised in that** at least one third locking device (51), more particularly a reversing lock device, is provided which is arranged on the bag connecting element (21, 21A, 21B), advantageously on the connecting section (31) of the bag connecting element (21, 21A, 21B) and also advantageously at the at least one second fixing means (33).

6. The bag connecting element according to any of claims 1 to 5, **characterised in that** a sealing section (46) is provided which projects from the connecting section (31) and advantageously in the joined state of two bag connecting elements (21, 21A, 21B) is in sealing contact with the bag connecting element (21, 21A), wherein also advantageously a sealing element (47) is provided, advantageously in the region of the free end of the sealing section (46).

7. A method of connecting a bag (101, 101A, 101B) to a container for the contamination-free filling of emptying of the bag (101, 101A, 101B) with the following steps:
a) arranging of a first bag (101) by way of a holding element (102) in a first bag connecting element (21);
b) fixing of the first bag connecting element (21) with the first bag (101) to a container connecting element (106) of a container;
c) filling or emptying of the first bag (101);
d) closing of the first bag (101); and
e) detachment of the first bag (101) in the region of the closing area created by closing, wherein a closed first bag section (111) remains on the container connecting element (106)
**characterised by** the use of at least one bag closing element (21, 21A, 21B) according to any of claims 1 to 6.

8. The method according to claim 7, **characterised in that** before filling or emptying of the first bag (101) (step c)) a closing part arranged on container connecting element (106) of the container is removed.

9. The method according to claim 7 or 8, **characterised by** the further steps:
f) arranging a second bag (101A) by means of a holding element (102A) in a second bag connecting element (21A);
g) fixing the second bag connecting element (21A) with the second bag (101A) to the first bag connecting element (21);
h) partially detaching the first bag connecting element (21) from the container connecting element (106) of the container;
i) removing the first bag section (111) from the container connecting element (106) of the container;
j) renewed fixing of the first bag connecting element (21) to the container connecting element (106) of the container;
k) filling or emptying of the second bag (101A);
l) closing the second bag (101A); and
m) detaching of the second bag (101A) in the region of the closing area created by closing, wherein a closed second bag section (111A) remains on the second bag connecting element (21A).

10. The method according to claim 9, **characterised by** the further steps:
n) arranging a further bag (101B) by means of a holding element (102B) in a further bag connecting element (21B);
o) fixing the further bag connecting element (21B) with the further bag (101B) to the previously arranged first bag connecting element (21A);
p) partially detaching the previously arranged bag connecting element (21A) from the bag connecting element (21) arranged before this one;
q) removing the existing connecting element (111A) from the previously arranged bag connecting element (21);
r) renewed fixing of the previously arranged bag connecting element (21A) to the bag connecting element (21) arranged before this one;
s) filling or emptying of the further bag (101B);
t) closing of the second bag (101B); and
u) detaching of the further bag (101B) in the region of the closing area created by closing, wherein a closed further bag section (111B) remains on the further bag connecting element (21B).

11. The method according to claim 10, **characterised in that** the steps n) to u) are repeated for each further bag to be connected, advantageously until the container has been completely filled or emptied.

12. The method according to any of claims 9 to 11, **characterised in that** that steps b), g) or o) take place by means of a first fixing movement, more particularly via a first fixing range in a first fixing direction, more particularly a first angle range in a first direction of rotation, and the steps h) and p) take place by means of a second fixing movement via a second fixing range in a direction of rotation opposite to the first direction of rotation, in particular by means of a second rotation movement via a second angle range in a second direction of rotation opposite the first direction of rotation, wherein the second fixing range, in particular the second angle range, is smaller than the first fixing range, in particular the first angle range.

13. The method according to claim 12, **characterised in that** the first fixing range, in particular the first angle range, is defined by the position of the second locking device (41) on the bag closure element (21, 21A, 21B), and advantageously reaching of the second locking device (41) when arranging the corresponding bag connecting element (21, 21A, 21B) is signalled to the user in an acoustically or tactilely perceived manner.

14. The method according to claim 12 or 13, **characterised in that** on joining two bag connecting elements (21, 21A, 21B) the second locking device (41) is moved from a blocking position into an unlocking position.

15. The method according to any one of claims 12 to 14, **characterised in that** the second fixing range, in particular the second angle range, is defined by the position of the first locking device (36) on the bag closure element (21, 21A, 21B) relative to the second locking device (41).

16. The method according to any of claims 12 to 15, **characterised in that** the steps j) or r) take place by means of a third fixing movement, more particularly by mean of a third rotation movement via a third fixing range in the first fixing direction, in particular a third angle range in the first direction of rotation, wherein advantageously the third fixing range, in particular the third angle range is defined by the position of the third locking device (51) relative to the first locking device (36).

## Revendications

1. Élément de raccordement de sac pour le raccordement d'un sac (101, 101A, 101B) à un réservoir pour le remplissage ou le vidage sans contamination du sac (101, 101A, 101B) par une ouverture de passage (22) pour le produit à incorporer ou à vider, comportant une section de raccordement (26) qui présente au moins un premier dispositif de fixation (28) comportant un support de retenue (34) destiné à recevoir une section de sac du sac (101, 101A, 101B), le sac (101, 101A, 101B) étant avantageusement maintenu au moyen d'un élément de retenue (102, 102A, 102B) dans le support de retenue (34), **caractérisé en ce que** l'au moins un premier dispositif de fixation (28) est apte à être assemblé avec un autre élément de raccordement de sac ou à être fixé à un autre élément de raccordement de réservoir (106) d'un réservoir et qu'une section de connexion (31) présente un second dispositif de fixation (33) pour assembler l'élément de raccordement de sac à un autre élément de raccordement de sac, l'au moins un second élément de fixation (33) ayant une conformation complémentaire à celle de l'au moins un premier dispositif de fixation (28).

2. Élément de raccordement de sac selon la revendication 1, **caractérisé en ce que** l'au moins un premier dispositif de fixation (28) et l'au moins un second dispositif de fixation (33) sont réalisés sous forme de pièces pouvant être amenées en engrènement mutuel d'une fermeture à baïonnette.

3. Élément de raccordement de sac selon la revendication 1 ou 2, **caractérisé en ce qu'il** est prévu au moins un premier dispositif de blocage (36), en particulier un dispositif de blocage à rotation arrière, qui est disposé au niveau de l'élément de raccordement de sac (21, 21A, 21B), avantageusement au niveau de la section de connexion (31) de l'élément de raccordement de sac (21, 21A, 21B) et plus avantageusement au niveau de l'au moins un second dispositif de fixation (33).

4. Élément de raccordement de sac selon une des revendications 1 à 3, **caractérisé en ce qu'il** est prévu au moins un deuxième dispositif de blocage (41), en particulier un dispositif de blocage à rotation arrière qui est verrouillable avec un élément de raccordement de sac (21, 21A) disposé avant et est disposé avantageusement dans le sens de fixation derrière l'au moins un premier dispositif de blocage (36), l'au moins un deuxième dispositif de blocage (41) ayant avantageusement une configuration déverrouillable et présentant avantageusement une section d'actionnement (44) actionnable lors de l'assemblage de deux éléments de raccordement de sac (21, 21A, 21B) pour déverrouiller l'au moins un deuxième dispositif de blocage (41).

5. Élément de raccordement de sac selon une des revendications 1 à 4, **caractérisé en ce qu'il** est prévu avantageusement au moins un troisième dispositif de blocage (51), en particulier un dispositif de blocage à rotation arrière, qui est disposé au niveau de l'élément de raccordement de sac (21, 21A, 21B) et plus avantageusement au niveau de l'au moins un second dispositif de fixation (33).

6. Élément de raccordement de sac selon une des revendications 1 à 5, **caractérisé en ce qu'il** est prévu une section d'étanchéité (46) qui dépasse de la section de connexion (31) et est avantageusement, en état assemblé de deux éléments de raccordement de sac (21, 21A, 21B), en contact étanche avec l'élément de raccordement de sac voisin (21, 21), étant en outre avantageusement prévu au moins un élément d'étanchéité (47), avantageusement au niveau d'une extrémité libre de la section d'étanchéité (46).

7. Procédé de raccordement d'un sac pour le raccordement d'un sac (101, 101A, 101B) à un réservoir pour le remplissage ou le vidage sans contamination du sac (101, 101A, 101B), comportant les étapes suivantes :
a) disposition d'un premier sac au moyen d'un élément de retenue (102, 102A, 102B) dans un premier élément de raccordement de sac (21) ;
b) fixation du premier élément de raccordement de sac (21) avec le premier sac (101) à un élément de raccordement de réservoir (106) d'un réservoir ;
c) remplissage ou vidage du premier sac (101) ;
d) fermeture du premier sac (101); et
e) sectionnement du premier sac (101) au niveau de la zone de fermeture créée par la fermeture, une première section de sacs fermée (111) restant au niveau de l'élément de raccordement de sac (106) ;
**caractérisé par** l'utilisation d'au moins un élément de raccordement de sac (21, 21A, 21B) selon une des revendications 1 à 6.

8. Procédé selon la revendication 7, **caractérisé en ce que**, avant le remplissage le vidage du premier sac (101) (étape c), une pièce de fermeture disposée au niveau de l'élément de raccordement de réservoir (106) du réservoir est enlevée.

9. Procédé selon la revendication 7 ou 8, **caractérisé par** les étapes supplémentaires suivantes :
f) disposition d'un second sac (101A) au moyen d'un élément de retenue (102A) dans un second élément de raccordement de sac de (21A) ;
g) fixation du second élément de raccordement de sac (21A) avec le second sac (101A) au premier élément de raccordement de sac (21) ;
h) détachement partiel du premier élément de raccordement de sac (21) de l'élément de raccordement de réservoir (106) du réservoir ;
i) enlèvement du premier élément de raccordement de sac (111) de l'élément de raccordement de réservoir (106) du réservoir ;
j) refixation du premier élément de raccordement de sac (21) à l'élément de raccordement de réservoir (106) du réservoir ;
k) remplissage ou vidage du second sac (101A) ;
l) fermeture du second sac (101A) ;
m) sectionnement du second sac (101A) au niveau de la zone de fermeture créée par la fermeture, une seconde section de sac fermée (111A) restant au niveau du second élément de raccordement de sac (21A).

10. Procédé selon la revendication 9, **caractérisé par** les autres étapes opératoires suivantes :
n) disposition d'un autre sac (101B) au moyen d'un élément de retenue (102B) dans un autre élément de raccordement de sac (21B) ;
o) fixation de l'autre élément de raccordement de sac (21B) avec l'autre sac (101B) à l'élément de raccordement de sac disposé avant (21A) ;
p) détachement partiel de l'élément de raccordement de sac disposé avant (21A) de l'élément de raccordement de sac disposé avant celui-ci (21) ;
q) enlèvement de la section de sac existante (111A) de l'élément de raccordement de sac disposé avant (21) ;
r) refixation de l'élément de raccordement disposé avant (21A) à l'élément de raccordement de sac disposé avant celui-ci (21) ;
s) remplissage ou vidage de l'autre sac (101B) ;
t) fermeture de l'autre sac (101B) ; et
u) sectionnement de l'autre sac (101B) au niveau de la zone de fermeture créée par la fermeture, une autre section de sac fermée (111B) restant au niveau de l'autre élément de raccordement de sac (21B).

11. Procédé selon la revendication 10, **caractérisé en ce que** les étapes n) à u) sont répétées pour chaque nouveau sac à raccorder, avantageusement jusqu'au vidage ou au remplissage intégral du réservoir.

12. Procédé selon une des revendications 9 à 11, **caractérisé en ce que** l'étape b), g) ou o) est effectuée au moyen d'un premier mouvement de fixation, en particulier au moyen d'un premier mouvement rotatif, sur une première zone de fixation dans un premier sens de fixation, en particulier une première zone d'angle, dans un premier sens de rotation, et que l'étape h) ou p) est effectuée au moyen d'un second mouvement de fixation sur une deuxième zone de fixation dans un second sens de fixation opposé au premier sens de fixation, en particulier au moyen d'un second mouvement rotatif sur une deuxième zone d'angle, dans un second mouvement rotatif opposé au premier mouvement rotatif, la deuxième zone de fixation, en particulier la deuxième zone d'angle, étant plus petite que la première zone de fixation, en particulier la première zone d'angle.

13. Procédé selon la revendication 12, **caractérisé en ce que** la première zone de fixation, en particulier la première zone d'angle, est définie par la position du deuxième dispositif de blocage (41) au niveau de l'élément de raccordement de sac (21, 21A, 21B) et que l'atteinte du deuxième dispositif de blocage (41), lors de la disposition de l'élément de raccordement de sac correspondant (21, 21A, 21B), est avantageusement signalée de manière perceptible pour l'utilisateur par système acoustique et/ou tactile.

14. Procédé selon la revendication 12 ou 13, **caractérisé en ce que**, lors de l'assemblage de deux éléments de raccordement de sac (21, 21A, 21B), le deuxième dispositif de blocage (41) est passé d'une position de blocage à une position de déblocage.

15. Procédé selon une des revendications 12 à 14, **caractérisé en ce que** la deuxième zone de fixation, en particulier la deuxième zone d'angle, est définie par la position du premier dispositif de blocage (36) au niveau de l'élément de raccordement de sac (21, 21A, 21B) par rapport au deuxième dispositif de blocage (41).

16. Procédé selon une des revendications 12 à 15, **caractérisé en ce que** l'étape j) ou r) est effectué au moyen d'un troisième mouvement de fixation, en particulier au moyen d'un troisième mouvement rotatif sur une troisième zone de fixation, dans le premier sens de rotation, la troisième zone de fixation, en particulier la troisième zone d'angle, étant avantageusement définie par la position du troisième dispositif de blocage (51) par rapport au premier dispositif de blocage (36).
